# EUROPEAN PATENT APPLICATION

(11) **EP 4 089 607 A1**
(43) Date of publication of application: **16.11.2022**
(21) Application number: 22156082.4
(22) Date of filing: 10.02.2022
(51) Int. Cl.: G06Q 20/20, G07G 1/00, G07G 3/00

(54) **SETTLEMENT PROCESSING DEVICE AND READING DEVICE**

(30) Priority: 11.05.2021 JP 2021080287
(71) Applicant: Toshiba TEC Kabushiki Kaisha, Tokyo 141-8562 (JP)
(72) Inventor: Kakino, Tomonari, Shinagawa-ku, Tokyo 141-8562 (JP)
(74) Representative: Bandpay & Greuter

(57) **Abstract**

According to one or more embodiments, a settlement processing device includes an interface and a processor. The interface communicates with a reading device. The processor acquires an image of a commodity captured by the reading device via the interface, obtains symbol information based on the captured image, executes settlement processing based on the symbol information, and stores the captured image and the symbol information in correlation with each other in a storage device.

## Description

### FIELD

Embodiments described herein relate generally to a settlement processing device and a reading device for retail store checkout systems and the like.

### BACKGROUND

A checkout system can be installed at a store, such as a retail store or a supermarket, to perform commodity registration and transaction settlement processing. The amount to be paid in the transaction can be based on commodity information for the registered items being purchased and also possibly discount information placed on product tags, labels, or presented as coupons, vouchers or the like. Such commodity and discount information can be recognized from an image captured by an image-type product scanner. The checkout system generally comprises a reading device (e.g., product scanner or the like) and a settlement processing device (e.g., a point-of-sale terminal). The reading device can read an optical symbol such as barcode or the like that has been attached to the commodity. In some instances, the reading device may be used to read a discount label or the like that has been affixed to the commodity. The settlement processing device can thus acquire both commodity information and discount information from the reading device. Commodity information acquired by the reding device includes, for example, a commodity code as indicated by a barcode. The discount information can be indicated by the discount label read by the reading device. The discount information may be presented on a discount sticker or as a discount marking on the commodity or otherwise. The settlement processing device then executes settlement processing of the commodity based on the commodity and discount information. The commodity information and the discount information are stored as journal data.

At a retail store or the like where such a checkout system is installed, there is always a potential for fraud by customers replacing or misappropriating a barcode or a discount label on a commodity. That is, for example, a discount label placed on one item may be removed and then placed on a different item for which the store does not intend to discount. Detection of such methods of fraud the can be difficult, even after the fact such as upon review of the stored journal data, which is problematic for store operators.

Hence, there is a need for a checkout system that can deter fraud resulting from misplacement or misappropriation discount labels and/or product barcodes that have been attached to other items.

### BRIEF DESCRIPTION OF THE DRAWINGS

FIG. 1 depicts a checkout system including a POS device and a reading device according to an embodiment.
FIG. 2 is a block diagram of a POS device according to an embodiment.
FIG. 3 is a block diagram of a reading device according to an embodiment.
FIG. 4 is a flowchart illustrating an operation example of a reading device according to an embodiment.
FIG. 5 is a diagram schematically illustrating a first processing example for a plurality of images sequentially captured by a reading device according to an embodiment.
FIG. 6 is a diagram schematically illustrating a second processing example for a plurality of images sequentially captured by a reading device according to an embodiment.
FIG. 7 is a diagram illustrating a configuration example of a discount information table according to an embodiment.
FIG. 8 is a diagram illustrating a configuration example of journal data according to an embodiment.
FIG. 9 is a flowchart illustrating an operation example of a POS device as a settlement processing device according to an embodiment.

### DETAILED DESCRIPTION

The invention is set out in the appended set of claims.

According to one or more embodiments, a settlement processing device includes an interface and a processor. The interface communicates with a reading device. The processor acquires an image of a commodity captured by the reading device, obtains symbol information based on the captured image, executes settlement processing based on the symbol information, and stores the captured image and the symbol information in correlation with each other in a storage device.

Hereinafter, some example embodiments will be described in detail with reference to the accompanying drawings.

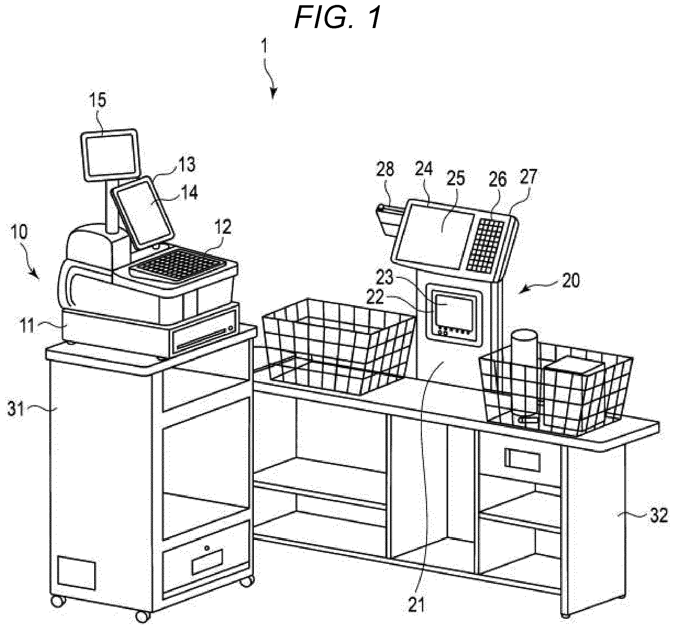

FIG. 1 depicts a checkout system 1 including a POS device 10 and a reading device 20.

As illustrated in FIG. 1, the checkout system 1 includes a POS device 10 as a settlement processing device and a reading device 20 for acquiring commodity information in a sales transaction or the like.

The POS device 10 executes registration processing and settlement processing of commodities (items) in a transaction. The POS device 10 is mounted on an upper surface of a drawer 11 of the checkout system 1 placed on a checkout table 31. The drawer 11 opens and closes under control of the POS device 10.

The POS device 10 includes a keyboard 12. The keyboard 12 is mounted on an upper surface of a main body of the POS device 10. The keyboard 12 is an operation device (input device) operated by an operator, a user, or the like.

The POS device 10 includes a display device 13 behind the keyboard 12 when viewed from the operator who operates the keyboard 12. The display device 13 is installed so that a display screen for displaying information is directed towards the operator operating the keyboard 12. A touch panel 14 can be stacked on the display screen of the display device 13. The touch panel 14 is another example of an operation device (input device). The touch panel 14 detects a position on the display screen of the display device 13 that is touched (selected) by the operator.

The POS device 10 includes a customer display device 15 further behind the display device 13. The customer display device 15 has a display screen for displaying information. The customer display device 15 is mounted such that the display screen can be rotated freely. Since the customer display device 15 can change the orientation of its display screen, the display screen can be directed to a customer standing on the other side of the POS device 10 from the operator (clerk).

A counter stand 32 has a shape of a horizontally long table. The counter stand 32 is provided such that it forms an L shape together with the checkout table 31. The reading device 20 is provided on the counter stand 32. The reading device 20 is communicably connected with the POS device 10 installed on the checkout table 31.

Areas on which shopping baskets are placed are provided on both sides of the reading device 20 on the counter stand 32. The counter stand 32 has a first area at a position on an entrance side or a starting side of the reading device 20 for placing a first shopping basket that contains commodity to be subjected to the registration and settlement processing. The counter stand 32 has a second area for placing a second shopping basket, in which the commodity that has undergone the registration processing (including an optical symbol reading process) is placed, at a position across the reading device 20 from the first area.

The reading device 20 (for example, a scanner device) includes a thin rectangular housing 21. A reading window 22 is disposed in front surface of the housing 21. The reading device 20 includes an imaging device 23 behind the reading window 22 in the housing 21. The imaging device 23 captures an image including an object which is present in front of the reading window 22 from inside the housing 21. For example, the imaging device 23 captures an image including a commodity presented by the operator toward the reading window 22. Since the imaging device 23 is situated behind the reading window 22 in the housing 21, the imaging device 23 captures an image that includes or shows at least a surface of the commodity that has been directed toward the reading window 22 by the operator.

The reading device 20 includes a display device 24 on an upper portion of the housing 21. On the display device 24, a touch panel 25 as an operation device is provided on the display screen thereof. The touch panel 25 detects the position(s) touched by the operator on the display screen of the display device 24.

The reading device 20 includes a keyboard 26 next to the display device 24. The touch panel 25 and the keyboard 26 can be used as operation devices (input device) for an operator to input commodity information.

The reading device 20 includes a card reader 27. The card reader 27 is a device that reads information, such as a customer ID, from a card presented by the customer. In the example illustrated in FIG. 1, the card reader 27 has a card groove as a card reading part provided next to the keyboard 26. The card reader 27 reads information recorded on the card passed along the card groove.

The reading device 20 also includes a customer display device 28 on the upper portion of the housing 21. The customer display device 28 displays information provided to the customer standing the other side of the counter stand 32 from the operator. A customer touch panel may be provided on the display screen of the customer display device 28.

In the first shopping basket brought in by the customer, the items to be purchased by customer are accommodated. A barcode (or other optical symbol) in which a commodity code corresponding to the commodity is encoded is displayed on a surface of the commodity. In addition to a barcode (or other symbol), a discount label indicating discount information to be applied in the purchasing of the commodity may also be affixed to the commodity surface. In this context, barcodes and discount labels are optical symbols that can be read by the reading device 20. For example, a barcode and discount label printed, placed, affixed, or otherwise presented on the surface of the commodity can be detected from the image(s) captured by the imaging device 23. In some cases, there may be a commodity on which a barcode is not displayed or a commodity for which the barcode cannot be read correctly. For such cases, the commodity information can be manually entered by the operator via an operation device, such as the touch panel 25 or the keyboard 26.

A commodity from the first shopping basket is placed into the second shopping basket by the operator after the barcode and the discount label of that commodity are read by the imaging device 23 or after the commodity information is manually entered by the operator using the touch panel 25 or the keyboard 26. For example, if the barcode of the commodity cannot be read by the imaging device 23, the commodity information is entered by operator's operation of the touch panel 25 or the keyboard 26 and then the commodity is moved to the second shopping basket by the operator.

The imaging device 23 disposed behind the reading window 22 captures images at a predetermined timing. When the commodity surface on which a barcode is displayed is directed towards the reading window 22, the imaging device 23 can capture an image including the barcode. When the commodity surface to which a discount label is affixed is directed towards the reading window 22, the imaging device 23 can capture an image including the discount label.

When the reading device 20 detects a barcode (or other optical symbol) in a captured image from the imaging device 23, the reading device 20 then decodes the detected barcode (or other optical symbol) to acquire corresponding information. In the present example, the barcode displayed on the commodity being purchased (registered) encodes a commodity code associated with the commodity in a preestablished database (e.g., PLU file). The discount label encodes or otherwise optically represents a discount to be applied to the purchase of the commodity. Such a discount might not already be reflected in the preestablished database for the commodity code associated with the item.

When the barcode is decoded, a commodity code (optical symbol information) can be obtained for the item being purchased. In general, a different commodity code is assigned to at least each commodity type to permit commodities of the same type to be identified. The commodity code is, for example, Universal Product Code (UPC) or a Japanese Article Numbering (JAN) code, which is a 13-digit number.

If the reading device 20 detects a discount label in the captured image, the reading device 20 recognizes the discount label as optical symbol information corresponding to discount information (e.g., a discount amount to be applied to the purchase of the commodity) as represented by the detected discount label. For example, the discount label may be a sticker affixed to the commodity surface, and the reading device 20 identifies the type of the discount sticker to obtain the discount information (for example, as a discount code encoded within the discount label) according to the identified type of the discount sticker. In some examples, reading device 20 may also or instead obtain discount information by reading information displayed on a medium other than a label affixed to the surface of the commodity. For example, discount information may be presented on a sale tag tied or affixed to the commodity, a printed coupon, a coupon ticket, provided by the store and such information may also be in a captured image. The discount code may be presented as a barcode or other two-dimensional code, such as a QR code.

The card reader 27 reads information recorded on the card presented by the customer. In the present embodiment, the card reader 27 reads a customer ID from the card presented by the customer. The card may be a magnetic card provided with a magnetic recording stripe or the like or may be a contact type or non-contact type integrated circuit (IC) card.

The card reader 27 may be an external device of the reading device 20 or a device separately connected to the POS device 10. The card reader 27 may be of any type or form so long as it can read the customer identification information. For example, the card reader 27 may read a two-dimensional code encoding information including the customer ID presented by the customer (for example, an ID image displayed on a portable terminal of the customer). The card reader 27 may be replaced with or provided with an authentication device that identifies the customer ID through identification processing of the customer by biometric authentication, such as face recognition.

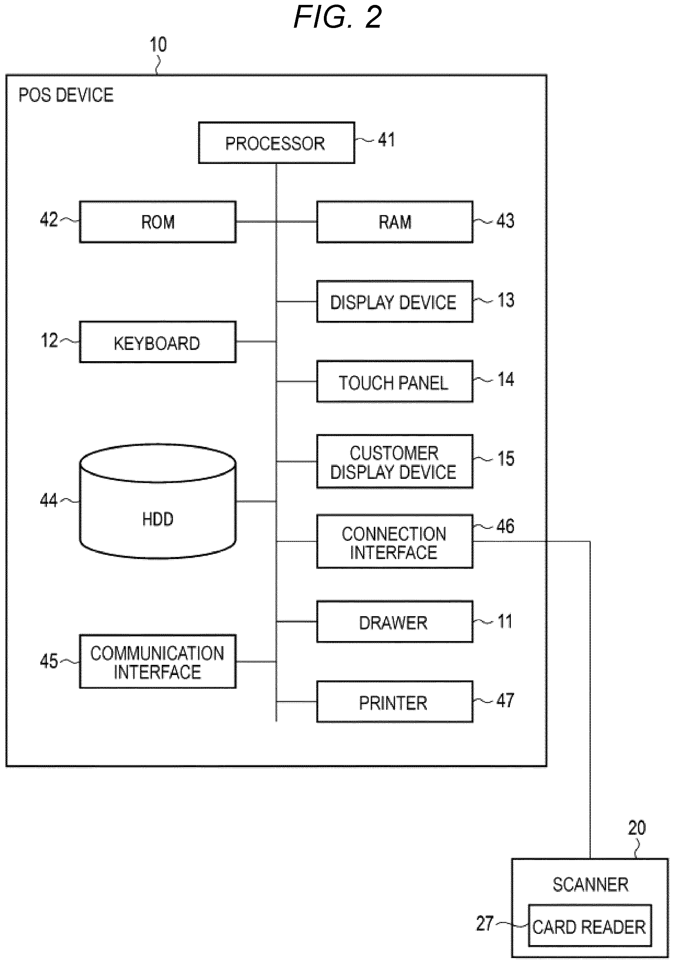

As illustrated in FIG. 2, in addition to the aspects illustrated in FIG. 1, the POS device 10 includes a processor 41, a read only memory (ROM) 42, a random-access memory (RAM) 43, a hard disk drive (HDD) 44, a communication interface 45, a connection interface 46, and the like.

The processor 41 executes various control, data processing, and the like. The processor 41 is, for example, a central processing unit (CPU). The processor 41 executes various processing by executing a program or programs stored in the ROM 42 or the HDD 44.

The ROM 42 includes a non-rewritable non-volatile memory. The ROM 42 may also or instead include a rewritable non-volatile memory. The ROM 42 stores, for example, an operating system or an application program.

The RAM 43 includes a volatile memory. The RAM 43 functions as a working memory. The RAM 43 stores data that is appropriately rewritten by the processor 41.

The HDD 44 is an example of the rewritable non-volatile memory. The HDD 44 stores programs and various data. For example, the processor 41 copies a part or all of the programs stored in the HDD 44 to the RAM 43 when the POS device 10 is started. The processor 41 executes the programs stored in the HDD 44.

The HDD 44 stores data for executing the necessary processing. For example, the HDD 44 stores a price lookup (PLU) file that stores, in advance, the commodity information of all commodities that can be subjected to the registration and settlement processing at the checkout system 1. The PLU file stores, for example, a commodity name, a unit price, a commodity classification, and the like as the commodity information corresponding to the commodity code assigned to each of the commodities.

The HDD 44 stores journal data as a journal file. The journal data includes transaction data that indicates contents of each transaction. The journal data stored as the journal file in the HDD 44 is generated for each transaction.

The communication interface 45 is for communicating with an external device. For example, the communication interface 45 is for data communication with a store computer. The store computer that communicates via the communication interface 45 is, for example, a data management computer installed in a backroom of a store or the like. The store computer may include a storage device that stores the PLU file to be distributed to the POS device 10.

The connection interface 46 is for connecting to the reading device 20. The processor 41 transmits and receives data to and from the reading device 20 via the connection interface 46. The processor 41 is connected to the card reader 27 via the connection interface 46. If the card reader 27 is an external device of the reading device 20, the POS device 10 may be provided with another interface for connecting to the card reader 27 as the external device in addition to the connection interface 46.

The drawer 11, the keyboard 12, the display device 13, the touch panel 14, and the customer display device 15 are respectively connected to the processor 41 via an input and output interface. The opening and closing operation of the drawer 11 is controlled by the processor 41. The keyboard 12 includes, for example, a numeric keypad. The keyboard 12 also includes a closing key or button (may also be referred to as a registration closure or confirmation key) for confirming registration of the commodity as one transaction to close the registration processing. The keyboard 12 supplies to the processor 41 a signal indicating a button or key operated for data input. The display contents of the display device 13 and the customer display device 15 are controlled by the processor 41. The touch panel 14 supplies to the processor 41 information indicating a portion touched by the operator on the display screen of the display device 13.

The printer 47 prints a receipt or the like. The printer 47 is connected to the processor 41. For example, the printer 47 prints information indicating the transaction contents of one transaction on a medium, such as a receipt, based on the control of the processor 41.

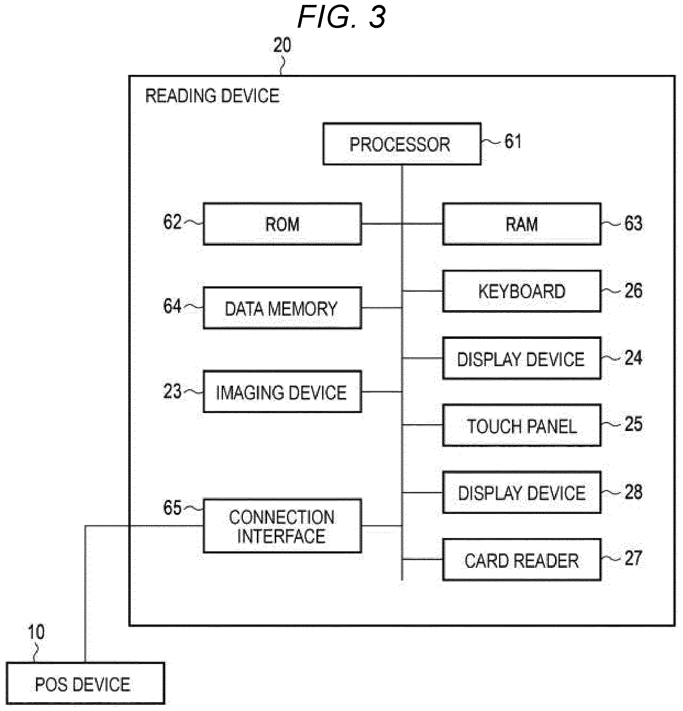

FIG. 3 is a block diagram illustrating the configuration example of the control system in the reading device 20. Reading device 20 may also be referred to as a scanner, a checkout scanner device, a product registration device, a checkout device, a scanner terminal, a product scanner, a product reader, a symbol reading device, a barcode reader, or the like, depending on the specifics of an embodiment.

As illustrated in FIG. 3, in addition to the configuration illustrated in FIG. 1, the reading device 20 includes a processor 61, a read only memory (ROM) 62, a random-access memory (RAM) 63, a data memory 64, a connection interface 65, and the like.

The processor 61 executes various control and data processing. The processor 61 is, for example, a central processing unit (CPU). The processor 61 executes various pieces of processing by executing a program or programs stored in the ROM 62 or the data memory 64.

The ROM 62 includes the non-rewritable non-volatile memory. The ROM 62 may include the rewritable non-volatile memory. The ROM 62 stores, for example, an operating system or an application program.

The RAM 63 is a volatile memory. The RAM 63 functions as a working memory. The RAM 63 stores data that is appropriately rewritten by the processor 61.

The data memory 64 is the rewritable non-volatile memory. The data memory 64 is, for example, an HDD. The data memory 64 stores programs and various types of data. For example, the processor 61 copies a part or all of the programs stored in the data memory 64 to the RAM 63 if the reading device 20 is started. With this configuration, the processor 61 sequentially executes the programs stored in the data memory 64. The data memory 64 stores data for executing the processing described later. For example, the data memory 64 includes a discount information table that stores information indicating the discount information (such as a discount code) corresponding to the discount label type.

The connection interface 65 is for connecting to the POS device 10. The processor 61 transmits and receives data to and from the POS device 10 via the connection interface 65. The reading device 20 may be further provided with a connection interface for connecting to the card reader 27 if the card reader 27 is an external device.

The imaging device 23, the display device 24, the touch panel 25, the keyboard 26, the card reader 27, and the customer display device 28 are respectively connected to the processor 61 via the input and output interface.

The imaging device 23 captures an image. For example, the imaging device 23 captures an image with a CCD image sensor, a COMS image sensor, or the like. The imaging device 23 is installed such that its imaging area includes the periphery of the reading window 22. The imaging device 23 captures an image including the surface of the commodity directed from the operator side toward the reading window 22. The imaging device 23 captures such an image at a predetermined timing. For example, the imaging device captures the image at a predetermined frame rate (for example, 30 fps). The images sequentially captured by the imaging device 23 at the predetermined frame rate are stored in the RAM 63.

The display contents of the display device 24 and the customer display device 28 are controlled by the processor 61. The touch panel 25 supplies to the processor 61 information indicating a portion touched by the operator on the display screen of the display device 24. The keyboard 26 includes, for example, a numeric keypad. The keyboard 26 supplies to the processor 61 a signal indicating a button or a key operated for data input.

The card reader 27 reads the customer ID as the information for identifying the customer from the card presented by the customer. The card reader 27 reads the customer ID from, for example, a magnetic card, a contact IC card, a contactless IC card, or a customer's portable terminal. The card reader 27 may be of any type or form so long as it can read the customer identification information. The card reader 27 may be replaced with or provided with an authentication device that identifies the customer by biometric authentication, such as face recognition. The card reader 27 may read the customer ID from either the card presented by the customer or the code (such as the barcode or the two-dimensional code) displayed on the screen of the customer's portable terminal. In another instance, the code indicating the customer ID may be captured by the imaging device 23, and the processor 61 may read the customer ID indicated by the code from the captured image of the imaging device 23.

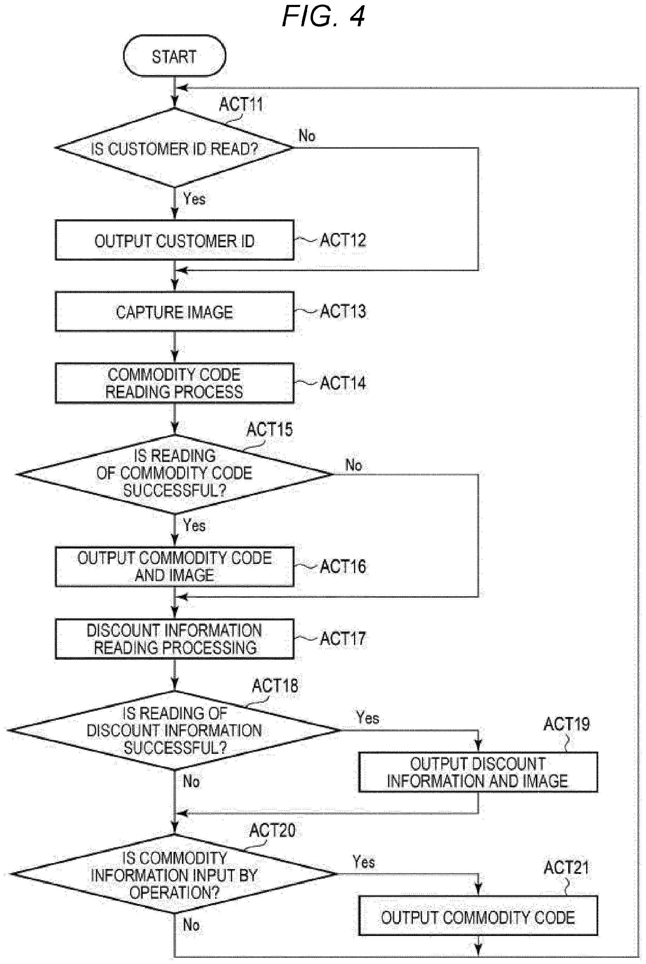

In the present embodiment, the processor 61 of the reading device 20 performs the processing according to the flowchart illustrated, as one example, in FIG. 4. The processor 61 receives the customer ID read by the card reader 27 (ACT 11). If the customer presents his or her card on which the customer ID is recorded, the operator causes the card reader 27 to read the card presented by the customer. The card reader 27 reads the information including the customer ID from the presented card. The card reader 27 notifies the processor 61 of the read information. If the processor 61 acquires the information including the customer ID from the card reader 27 (YES in ACT 11), the processor 61 outputs the customer ID to the POS device 10 (ACT 12).

The imaging device 23 captures an image at a predetermined timing (for example, a predetermined frame rate) (ACT 13). The captured image is stored in the RAM 63. The processor 61 executes image processing, such as commodity code reading processing and discount information reading processing, of the captured image stored in the RAM 63. The image can be sequentially stored in the RAM 63 for the image processing.

For example, every time the captured image is stored in the RAM 63, the processor 61 performs the commodity code reading processing on the stored image (ACT 14). By the commodity code reading processing, the processor 61 detects, for example, the barcode from the stored image. If the barcode is detected, the processor 61 reads the commodity code by decoding the detected barcode.

If the commodity code is read (YES in ACT 15), the processor 61 outputs the commodity code and the corresponding captured image as one data set to the POS device 10 (ACT 16). If the commodity code cannot be read (NO in AC15), the processor 61 proceeds to ACT 17 without outputting the captured image to the POS device 10. However, in other examples, the processor 61 may still output the captured image to the POS device 10 even if the commodity code cannot be read.

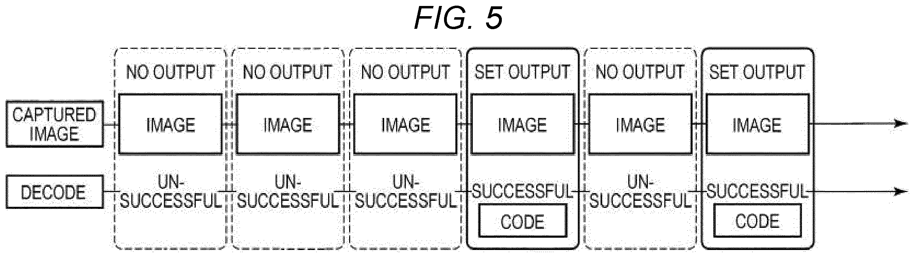

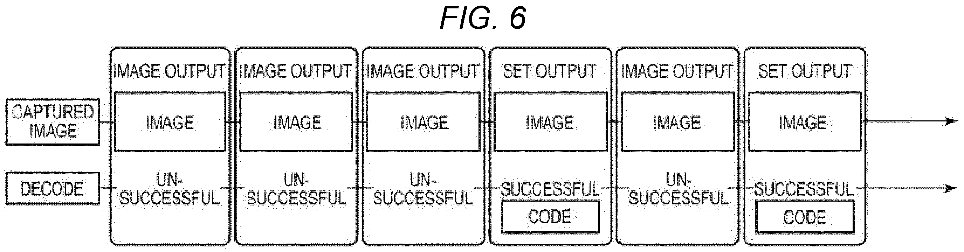

FIG. 5 is a diagram schematically illustrating a first processing example for the imaging device 23 in the reading device 10 operating at a predetermined frame rate. FIG. 6 is a diagram schematically illustrating a second processing example for images sequentially captured by the imaging device 23 in the reading device 10 operating at a predetermined frame rate.

The processor 61 executes the commodity code reading processing for each of the images sequentially captured by the imaging device 23 and stored in the RAM 63 as illustrated in FIGS. 5 and 6.

In the first processing example illustrated in FIG. 5, the processor 61 does not output a captured image if the commodity code cannot be read (that is if decoding is unsuccessful). If the commodity code is read (that is if decoding is successful), the processor 61 transmits both the commodity code and the corresponding captured image to the POS device 10. The commodity code and the corresponding captured image (from which the commodity code was read) are sent in association (paired) with each other to the POS device 10. According to the first processing example, since the captured image is not output if the commodity code cannot be read, a communication load between the reading device 20 and the POS device 10 can be reduced.

In the second processing example illustrated in FIG. 6, even if the commodity code cannot be read (that is if decoding is unsuccessful), the processor 61 outputs a captured image (e.g., a representative image corresponding to an image acquired in the commodity code reading attempt). If the commodity code is read (that is if decoding is successful), the processor 61 outputs the read commodity code and the corresponding captured image (from which the commodity code was read) to the POS device 10. According to the second processing example, since a captured image is output to the POS device 10 even if the commodity code cannot be read, images captured by the imaging device 23 can be continuously acquired and stored. With this configuration, the imaging device 23 can display images captured at a predetermined frame rate on a display device or the like during the registration process.

Referring back to FIG. 4, the processor 61 performs the discount information reading processing on the captured image stored in the RAM 63 (ACT 17). For example, the processor 61 detects the image of the discount label from the captured image by the discount information reading processing. If the processor 61 can detect the image of the discount label, the processor 61 then determines the type of the detected discount label. If the discount label type can be determined, the processor 61 refers to the discount information table stored in the data memory 64 and specifies the discount information according to the discount label type.

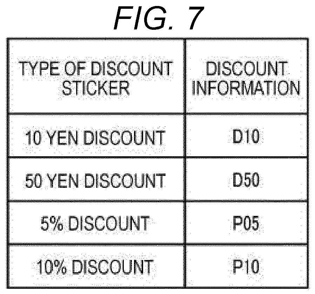

FIG. 7 is a diagram illustrating a discount information table illustrating an example correspondence relationship between discount labels and discount information (discount codes).

As illustrated in FIG. 7, the discount information table indicates a discount code as the "Discount Information" corresponding to the discount label type ("Type of Discount Sticker"). If the processor 61 determines a discount label type of a discount sticker is included in the captured image, the processor 61 can specify the corresponding discount information (by discount code) by referring to the discount information table.

If discount information is successfully read from the captured image (YES in ACT 18), the processor 61 outputs the corresponding discount information and captured image as one data set (paired or correlated data) to the POS device 10 (ACT 19). If the discount information cannot be read (NO in ACT 18), the processor 61 proceeds to the ACT 20 without outputting a captured image to the POS device 10.

The processor 61 can then receive commodity information as input by the operator using the operation device (ACT 20). Thus, for example, the operator manually inputs commodity information for a commodity whose barcode cannot be read by using an operation device, such as the touch panel 25 or the keyboard 26. For example, for a commodity to which a barcode is not affixed or a commodity for which the affixed barcode cannot be read due to marring, stains or the like, the operator inputs the commodity information by use of the operation device (input device). If commodity information is input by the operator(YES in ACT 20), the processor 61 outputs the commodity code corresponding to the input commodity information to the POS device 10 (ACT 21).

The processor 61 of the reader 20 repeatedly executes the processes of ACTs 11 to 21 until a barcode is read or the commodity information is otherwise input for all the commodities in a single sales transaction (e.g., all the commodities in the first shopping basket brought by the customer). With this configuration, the reading device 20 can output the commodity codes and discount information for all the commodities in a transaction along with corresponding captured images as a data set to the POS device 10.

In general, the operator (user) will hold the discount label up to the reading window 22 for the commodity with the discount label directly after causing the barcode to be read or after inputting the commodity information for the commodity. With this configuration, the reading device 20 reads the discount information for the commodity for which the commodity code was read or the commodity for which the commodity information was input immediately before.

The reading device 20 according to the present embodiment captures an image of the commodity surface including the optical symbol, such as the barcode or the discount label, with the imaging device. If the reading device 20 detects the optical symbol from the captured image, the reading device 20 decodes the information indicated by the detected optical symbol. If the reading device 20 decodes the information indicated by the optical symbol, the reading device 20 supplies the information decoded from the optical symbol and the captured image as one data set to the POS device 10 that is the settlement processing device.

With this configuration, according to the reading device 20 of the present embodiment, not only the encoded information indicated by the optical symbol that has been scanned/read but also captured image from which the optical symbol has been detected can be recorded by the settlement processing device. Then, the checkout system 1 can later analyze and/or confirm the captured image from which the decoded optical symbol has been detected. This way, fraud due to replacement or misappropriation of the optical symbol, such as the barcode or the discount label, can be verified later, and a deterrence effect against such fraud can be expected.

After the processing by the reading device 20, the POS device 10 as the settlement processing device executes the settlement processing for the commodity whose commodity code has been input by the reading device 20. The POS device 10 stores the journal data for a transaction to be settled in the HDD 44. After the processing for the transaction is started with the reading device 20, the processor 41 secures (allocates) a journal buffer within the RAM 43 for storing the journal data for the transaction.

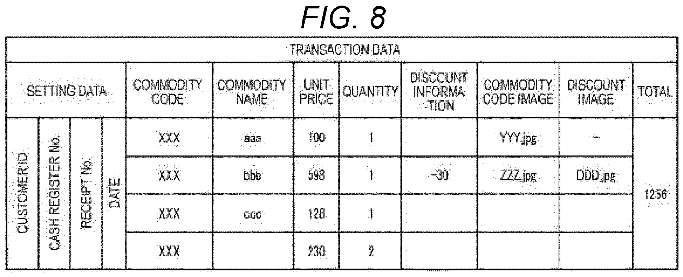

FIG. 8 is a diagram illustrating a configuration example of journal data stored in POS device 10 to be used as a settlement processing device.

In FIG. 8, the journal data includes setting data for each transaction and transaction data indicating the commodity information and additional information about each commodity to be settled (purchased).

In this example, the setting data within the transaction data includes a "cash register number," a "receipt number," a "date," a "customer ID." The setting data may include other data or information. The "cash register number" is identification information for identifying the corresponding POS device 10 functioning as a cash register. The "receipt number" is identification information for identifying the corresponding transaction. The "date" is information indicating the date and time when the transaction was carried out. The "customer ID" is customer identification information that is uniquely assigned to each customer. The "customer ID" can be a customer ID read from a customer card or the like by the card reader 27. If a specific customer ID is not or cannot be acquired, the "customer ID" can be omitted or entered as a nonce or placeholder value.

The transaction data includes the information for each commodity to be subjected to the settlement processing in a transaction. In the example illustrated in FIG. 8, information stored in association with each commodity code in the in the transaction includes a "commodity name," a "unit price," a "quantity," "discount information," a "commodity code image," and a "discount image." Furthermore, as transaction data, the total amount due for all the commodities in the transaction is also recorded as a value in the "total" column.

The "commodity code" can be information read from the barcode on the commodity by the reading device 20. In some instances, the "commodity code" may be obtained as commodity information input by the operator via the reading device 20 or otherwise. The "commodity name" and "unit price" can be information obtained by reference to the commodity code (e.g., values for this information may be stored in another data file in association with the commodity code). The "quantity" value in this context indicates the number of items having the same commodity code being purchased in the same transaction. The "discount information" in this context is information obtained by the reading device 20 from a discount label attached to the commodity.

The "commodity code image" is a captured image supplied from the reading device 20 in conjunction with the reading of the commodity code. If the image of the barcode is not or cannot be captured for a specific commodity (for example, in a case where the operator manually inputs the commodity information by the touch panel 25 or the keyboard 26), the "commodity code image" can be omitted. The "discount image" is a captured image supplied from the reading device 20 along with discount information that has been read/acquired. If an image of the discount information is not or cannot be captured for a specific commodity (for example, in a case where the operator manually inputs the discount information by the touch panel 25 or the keyboard 26), the "discount image" can be omitted.

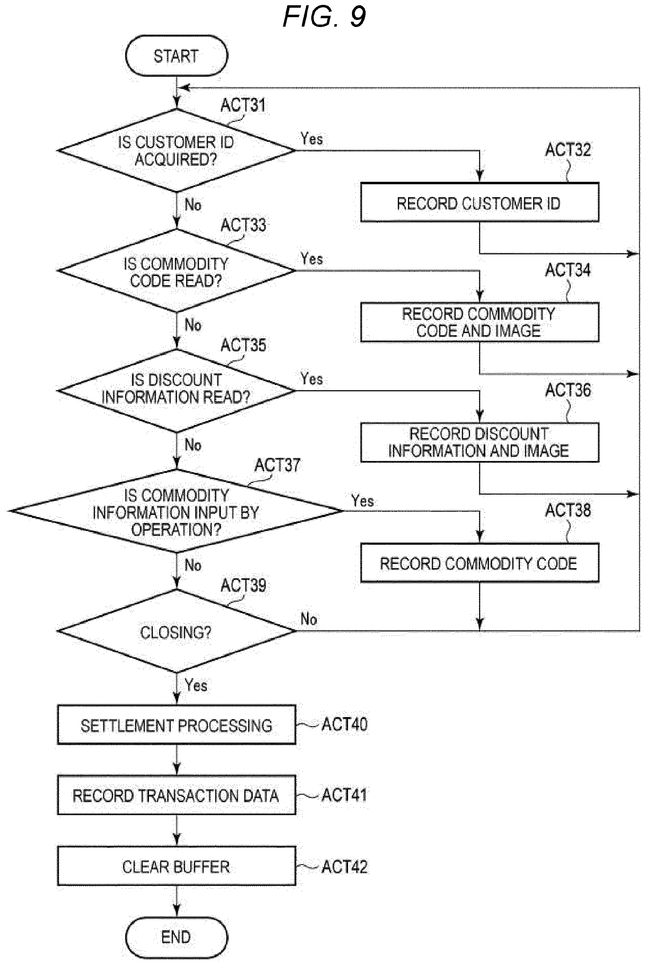

The POS device 10 performs processing for a transaction according to the flowchart of FIG. 9.

The processor 41 (see FIG. 1) of the POS device 10 acquires information from the reading device 20 connected thereto via the connection interface 46. Once the reading device 20 starts the processing for a transaction, the processor 41 secures (allocates) space for a journal buffer in the RAM 43 for storing the journal data of the transaction.

If the reading device 20 acquires a customer ID read by, for example, the card reader 27 (YES in ACT 31), the processor 41 stores the customer ID in the RAM 43 (ACT 32). The processor 41 may receive customer identification information from the reading device 20 and then record such information as part of the setting data illustrated in FIG. 8 within the journal buffer of the RAM 43.

When the reading device 20 reads a commodity code (YES in ACT 33), the processor 41 acquires the commodity code and the corresponding captured image (the image from which the commodity code had been detected) from the reading device 20 via the connection interface 46. After the commodity code and the captured image are acquired, the processor 41 stores each in the RAM 43 (ACT 34).

For example, the processor 41 adds the commodity code to the journal buffer of the RAM 43 and also records the corresponding commodity name and unit price for the commodity code. The processor 41 also stores the captured image acquired in conjunction with the commodity code as a commodity code image corresponding to the commodity code in the journal buffer of the RAM 43.

The processor 41 may determine, based on some predetermined condition, whether or not to record the captured image. For example, the processor 41 might only store the captured images as commodity code images for high-priced items with a "unit price" that is higher than some predetermined reference value. In such a case, the processor may can omit storing a captured image for a commodity that does not satisfy the predetermined condition (for example, the commodity whose "unit price" is equal to or less than the predetermined reference value). As a result, the amount of data stored as journal data can be reduced.

If the reading device 20 reads the discount information (YES in ACT 35), the processor 41 acquires the discount information and the corresponding captured image from the reading device 20 via the connection interface 46. When the discount information and the corresponding captured image are acquired, the processor 41 stores them in the RAM 43 (ACT 34).

The processor 41 stores the discount information acquired from the reading device 20 as the discount information for the commodity corresponding to the commodity code that was acquired immediately before the acquired discount information. For example, if the processor 41 acquires the discount information (and the corresponding captured image), the processor 41 enters this information in the "discount information" field for the commodity code recorded most recently in the journal buffer of the RAM 43. Furthermore, the processor 41 stores the corresponding captured image (also referred to as a discount image) acquired with the discount information in the journal buffer of the RAM 43.

The processor 41 may determine, based on one or more predetermined conditions, whether or not to treat the captured image as a discount image. For example, the processor 41 may just store a captured image as a discount image for a high-priced commodity whose "unit price" is higher than a predetermined reference value. In such a case, the processor 41 may omit storing a captured image even if discount information corresponding to the captured image is obtained for a commodity when that commodity does not satisfy the predetermined condition(s) (for example, a commodity whose "unit price" is equal to or less than a predetermined reference value). As a result, the amount of data stored as journal data can be reduced.

If the commodity information is input by an operation device of the reading device 20 (YES in ACT 37), the processor 41 acquires the commodity code corresponding to the commodity information from the reading device 20. If the commodity code is acquired, the processor 41 retains the commodity code acquired from the reading device 20 in the RAM 43 (ACT 38). In such a case, the captured image is not supplied from the reading device 20, and the processor 41 adds the commodity code acquired from the reading device 20 to the journal buffer of the RAM 43 and records the commodity name and the unit price corresponding to the added commodity code.

The processor 41 repeatedly executes the processes of ACTs 31 to 38 until it receives input to the closing button for closing instruction (NO in ACT 39). The closing button is provided on the keyboard 12 of the POS device 10 and operated by the operator if the input of information on all commodities of one transaction is finished to start the settling processing for the commodities of one transaction. For example, the operator operates the closing button when the processing for all commodities of one transaction by the reading device 20 is done.

Until the closing button provided on the keyboard 12 is selected (that is, while NO in ACT 39), the processor 41 repeatedly executes the processes of ACTs 31 to 38 as necessary. Once the closing button of the keyboard 12 is has been selected(YES in ACT 39), the processor 41 generates journal data based on the information retained in the journal buffer of the RAM 43. After the journal data is generated, the processor 41 executes settlement processing according to the total amount indicated by the journal data (ACT 40).

Once the settlement processing is finished, the processor 41 stores (records) the generated journal data as a journal file in the HDD 44 (ACT 41). After the journal file is stored, the processor 41 clears the journal buffer from the RAM 43 (ACT 42) and ends the processing.

According to the present embodiment, the POS device 10 as the settlement processing device acquires the commodity code obtained by decoding the barcode and the captured image including the image of the barcode from the reading device 20. The POS device acquires the discount information, which is recognized from the discount label and the captured image including the image of the discount label, from the reading device 20. The POS device executes the settlement processing based on the acquired commodity code and discount information. The POS device 10 stores the journal data in which the commodity code and the discount information are correlated with the captured image in the HDD 44.

With this configuration, fraud by replacement or misappropriation of the discount label and/or the barcode can be monitored and confirmed based on the captured image stored as the journal data even after the settlement processing is executed. As a result, a deterrent effect against such fraud can be expected.

The POS device 10 as the settlement processing device acquires the customer identification information that identifies a customer and stores the journal data associated with the customer identification information in the memory. With this configuration, a customer can be identified immediately from the journal data, and the fraud deterrent effect on each customer can be enhanced.

While certain embodiments have been described, these embodiments have been presented by way of example only and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A settlement processing device, comprising:
an interface configured to communicate with a reading device;
a storage device; and
a processor configured to:
acquire, via the interface, an image captured by the reading device;
obtain symbol information from an optical symbol in the captured image;
execute settlement processing for a commodity based on the symbol information; and
store the captured image and the symbol information in correlation with each other in the storage device.

2. The settlement processing device according to claim 1, wherein the symbol information is obtained by decoding the optical symbol.

3. The settlement processing device according to claim 1 or 2, wherein the optical symbol comprises a barcode on the commodity.

4. The settlement processing device according to any one of claims 1 to 3, wherein the optical symbol comprises a discount label on the commodity.

5. The settlement processing device according to any one of claims 1 to 4, wherein the symbol information includes a commodity code for the commodity and a discount amount to be applied to purchase of the commodity.

6. The settlement processing device according to any one of claims 1 to 5, wherein the processor is further configured to:
acquire customer identification information via the interface; and
store the customer identification information in correlation with the captured image and the symbol information in the storage device.

7. The settlement processing device according to claim 6, wherein the processor is configured to store the customer identification information, the captured image, and the symbol information as journal data.

8. The settlement processing device according to any one of claims 1 to 7, wherein the processor is configured to store the captured image and the symbol information as historical information.

9. The settlement processing device according to any one of claims 1 to 8, wherein the settlement processing device is a point-of-sale terminal.

10. The settlement processing device according to any one of claims 1 to 9, wherein the processor is configured to store the captured image even when the symbol information is not obtained from the optical symbol.

11. A reading device, comprising:
an interface configured to communicate with a settlement processing device;
an imaging device configured to capture an image of a commodity including an optical symbol; and
a processor configured to:
decode the optical symbol in the captured image from the imaging device; and
output the captured image and decoded symbol information corresponding to the decoded optical symbol in correlation with each other to the settlement processing device via the interface.

12. The reading device according to claim 11, wherein the optical symbol comprises a barcode and/or a discount label on the commodity.

13. The reading device according to claim 11 or 12, wherein the decoded symbol information is discount information from a discount label associated with the commodity.

14. The reading device according to any one of claims 11 to 13, wherein the processor is configured to output the captured image even when the decoded symbol information is not obtained from the optical symbol.

15. A checkout system, comprising:
the reading device according to any one of claims 11 to 14; and
the settlement processing device according to any one of claims 1 to 10.
